# EUROPEAN PATENT APPLICATION

(11) **EP 1 792 543 A1**
(43) Date of publication of application: **06.06.2007**
(21) Application number: 05077736.6
(22) Date of filing: 30.11.2005
(51) Int. Cl.: A23L 1/30, A23L 1/304, A23L 1/05

(54) **Magnesium fortified food product and additive**

(71) Applicant: UNILEVER N.V., 3013 AL Rotterdam (NL)
(72) Inventor: Marshman, Clive Edward, Unilever R & D Vlaardingen, 3133 AT Vlaardingen (NL); Velikov, Krassimir P., Unilever R & D Vlaardingen, 3133 AT Vlaardingen (NL)
(74) Representative: Kan, Jacob Hendrik

(57) **Abstract**

A food product which has been fortified in magnesium content, having an magnesium content of at least 5 ppm and comprising magnesium- containing nanoparticles, wherein the nanoparticles are stabilised by means of a biopolymer, provides good bioavailability and stability.

## Description

### FIELD OF THE INVENTION

The invention generally relates to the field of fortified food products. More in particular, it relates to the fortification of a food product with magnesium. The invention also relates to an additive for the fortification and supplementation of food and other products with magnesium and to a method of preparing the same.

### BACKGROUND TO THE INVENTION

Magnesium is an essential trace element in animal and human nutrition. Magnesium is involved in more than 300 essential metabolic reaction. For examples, the metabolism of carbohydrates and fats to produce energy requires numerous magnesium dependent chemical reactions. Magnesium is required by the adenosine triphosphate (ATP) synthesizing protein in mitochondria. ATP, the molecule that provides energy for almost all metabolic processes, exists primarily as a complex with magnesium (MgATP). Magnesium is required at a number of steps during the synthesis of nucleic acids (DNA and RNA) and proteins. A number of enzymes participating in the synthesis of carbohydrates and lipids require magnesium for their activity. Glutathione, an important antioxidant, requires magnesium for its synthesis. Magnesium plays a structural role in bone, cell membranes, and chromosomes. Magnesium is required for the active transport of ions like potassium and calcium across cell membranes. Cell signaling requires MgATP for the phosphorylation of proteins and the formation of the cell signaling molecule, cyclic adenosine monophosphate (cAMP). Finally, calcium and magnesium levels in the fluid surrounding cells affect the migration of a number of different cell types.

Magnesium deficiency in healthy individuals who are consuming a balanced diet is rare because magnesium is abundant in both plant and animal foods and because the kidneys are able to limit urinary excretion of magnesium when intake is low. However, in many countries, especially in developing countries, it is difficult for many people to have well balance diet. In addition, the following conditions are known to increase the risk of magnesium deficiency.
- Gastrointestinal disorders: Prolonged diarrhea, Crohn's disease, malabsorption syndromes, surgical removal of a portion of the intestine, and intestinal inflammation due to radiation may all lead to magnesium depletion.
- Renal disorders (magnesium wasting): Diabetes mellitus and long-term use of certain diuretics may result in increased urinary loss of magnesium.
- Chronic alcoholism: Poor dietary intake, gastrointestinal problems, and increased urinary loss of magnesium may all contribute to magnesium depletion, which is frequently encountered in alcoholics.
- Age: Several studies have found that elderly people have relatively low dietary intakes of magnesium. Because intestinal magnesium absorption tends to decrease and urinary magnesium excretion tends to increase in older individuals, suboptimal dietary magnesium intake may increase the risk of magnesium depletion in the elderly.

Since the human body does not produce minerals, it is totally dependent on an external supply of magnesium, either nutritional or supplementary. The importance of adequate magnesium intake is recognized during the whole life of the human being. The recommended daily allowance for magnesium intake is from 80 to 420 mg per day, and is dependent on age and sex.

In general, water-soluble minerals used for supplements are likely to impair the stability of a food product. Hence, it cannot contain more than a certain amount of such water-soluble minerals. This also restricts their use as mineral supplements. Moreover, the peculiar bitter or metallic taste is also a problem for many food formats. In addition, multivalent metal ions such as magnesium are particularly can react with several proteins and polysaccharides causing precipitation and change in texture.

In general, water-insoluble minerals affect the stability and taste of the product less and high amounts can be added. However, the high specific gravity of minerals (generally as high as 1.5 or higher) causes them to sediment in a short time when dispersed in a liquid product such as milk, so that the stability and the appearance of food is adversely affected. Thus, the amount that can be added is still limited.

Furthermore, the use of mineral supplements in form of insoluble large particles can cause abrasion and severe damage of the mixing and processing equipment.

Magnesium in the form of a water-soluble salt or complex can be added to food and/or beverages to provide the daily allowance. The addition of Mg is relatively high in many fortified foods and can cause precipitation of insoluble Mg-salts, gelation of sterilised liquid dietary formulas and unacceptable organoleptic changes in the product, like: lighter colour, astringency or chalky flavour. High amounts of Mg (besides Ca) can destabilise proteins and might cause sedimentation or gelation. Changes in pH due to the addition of Mg oxide or hydroxide (carbonate) might lead a higher viscosity or even precipitation or sedimentation of other compounds. Finally, the shelf life of the products is reduced. Magnesium can change the colour of sterile (UHT) strawberry and chocolate drinks. After UHT treatment with insoluble Mg-salts the colour is lighter and the product looks artificial (not like it should be). Beside bitterness and a chalky flavour, high amounts can produce astringency.

Moreover, the addition of magnesium to beverages, especially to plant protein containing drinks and beverages can be very difficult. If highly or slightly soluble sources of magnesium are used, interaction between the magnesium and magnesium sensitive ingredients, such as proteins, occurs. Thus, the addition of magnesium chloride or other soluble magnesium salts such as magnesium sulfate, magnesium lactate, magnesium gluconate, magnesium fumarate, magnesium citrate, etc., cause drastic instabilities in plan protein containing liquid, semiliquid or solid products after mixing with water or other liquid products containing water.

As alternatives to the soluble sources of magnesium, which lead to an undesirable flavor and/or color, insoluble magnesium sources such as magnesium carbonate, magnesium phosphate, etc. may be used. These forms of magnesium cause little chemical instabilities, but added to drinks and liquid beverages they may cause severe sedimentation, which could make the mineral not available to the consumer because it remains in the package, or lost of transparency, if added to clear products, or color change if added to colored products.

Finally, from a technical point of view, the use of insoluble large particles of insoluble magnesium salts can cause abrasion and severe damage of the mixing and processing equipment.

So far, few attempts have been made to simultaneously address these very complex issues. For example, EP-B-870 435 (Taiyo Kagaku) discloses a mineral-containing composition having improved dispersion stability and comprising enzymatically decomposed lecithin and water-insoluble mineral, preferably ferric pyrophosphate, calcium carbonate, calcium phosphate or calcium pyrophosphate. The use of enzymatically decomposed lecithin is essential for achieving the desired dispersion stability. A major drawback of these compositions is that the emulsifier lecithin has to be present. It is known that lecithin has not very pleasant taste. In addition, the use of emulsifier makes the product particularly costly and not appealing to the consumer.

Products containing lecithin are "Generally Recognised As Safe" (GRAS) under 21 CFR 184.1400 and specifications of the Food Chemicals Codex. Lecithin products that have been modified sometimes require special labelling. For example, when enzymatically modified, the phrase "Enzymatically Modified Lecithin" should appear on labelling. Finally, lecithin is known to vary significantly in quality from batch to batch causing extra difficulties in food processing.

In many cases the unnecessary use of emulsifiers is not desirable. Therefore, it is desirable to develop a nutritional additive that fulfils the above-mentioned requirements for stability without the necessity of using enzymatically-decomposed lecithin.

It is therefore an object of the present invention to provide a magnesium fortified food product and magnesium-containing additive, which overcomes one or more of the above mentioned drawbacks. Surprisingly, it has now been found that this object can be achieved by the food product according to the invention, having and magnesium content of at least 5 ppm, comprising magnesium-containing nanoparticles stabilised with biopolymers.

### SUMMARY OF THE INVENTION

According to a first aspect, the invention provides a food product which has been fortified in magnesium, having magnesium content of at least 5 ppm, comprising magnesium-containing nanoparticles, wherein the nanoparticles are stabilised by means of a biopolymer.

According to a second aspect, there is provided an magnesium containing additive for use in the food and other products according to the invention, in the form of an magnesium-containing nanoparticles having a diameter of 5 - 1,000 nanometer, wherein the nanoparticles are stabilised by means of a biopolymer.

According to a third aspect, there is provided a process for preparing the magnesium-containing additive of the invention and according to a fourth aspect, there is provided a process for making the food product of the invention.

### DETAILED DESCRIPTION OF THE INVENTION

The invention regards a magnesium-fortified food product having a magnesium content of at least 5 ppm magnesium (Mg).

The food product comprises magnesium in the form of magnesium-containing biopolymer-stabilised nanoparticles. Nanoparticles are defined for the purpose of this invention as particles stabilised by the presence of protective biopolymer. They have a particle size of about 5 to 1,000 nanometer. The compositions of the invention contain biopolymer-stabilised magnesium containing nanoparticles, which have an effective average particle size of less than about 1,000 nm. In a preferred embodiment of the invention, the biopolymer stabilised magnesium containing nanoparticles have an effective average particle size of less than about 900 nm, preferably less than about 800 nm, less than about 700 nm, less than about 600 nm, less than about 500 nm, less than about 400 nm, less than about 300 nm, less than about 250 nm, less than about 200 nm, less than about 150 nm, less than about 100 nm, less than about 75 nm, or even less than about 50 nm.

The effective average particle size can be measured using techniques that are well known in the art, such as electron microscopy or light scattering techniques. The nanoparticles may be crystalline, polycrystalline or amorphous.

The magnesium containing nanoparticles used in the present invention are stabilised by means of a biopolymer and their derivatives, such as, polyamides (e.g. proteins and poly(amino acids)), polysaccharides (e.g. cellulose, starch and xanthan), organic polyoxoesters synthesized by bacteria and eukaryotic organisms (e.g. poly(hydroxyalkanoic acids), poly(malic acid), polylactides, polyglycolide, polyanhydrides, polyesteramides and cutin), polythioesters, polyphosphate, polyisoprenoids (e.g. natural rubber or Gutta Percha), polyphenols (e.g. lignin or humic acids), and nucleic acids such as ribonucleic acids and deoxyribonucleic acids. The most preferred biopolymers are polyamides (protein and poly(amino acids)) and polysaccharides.

The polyamide (protein) source may be any specific type of protein, e.g. animal (collagens and gelatines), in particular dairy protein, or plant protein. The plan protein sources are for example soy, pea, amaranth, canola (rape), carob, corn, oat, potato, sesame, rice, wheat, lupin protein, or mixtures thereof. These proteins can be intact or partially hydrolysed, and can be used separately or in combination with each other. The preferred protein source is whey protein or soy protein.

The polysaccharide source can be used as stabilisers, particularly polysaccharide gums. Preferred stabilisers are selected from the group of locust bean gum, tamarind seed polysaccharide, alginates, alternan, cellulose, hydroxypropylmethylcellulose (anionic), cell wall polysaccharides from fungi, chitin, chitosan, curdlan, dextran, elsinan, emulsan, gellan, glycogen, glycopeptides, seed gums, hyaluronan, inulin, levan, lipopolysaccharides and other extracellular polysaccharides, peptidoglycans from archaea and bacteria, pectin, pullulan, schizophyllan, scleroglucan, succinoglycan, starch, teichoic acids, teichuronic acids and xanthan gum, guar gum, tara gum, gum arabic, kalaya gum, carrageenan, agar soybean polysaccharides and mixtures thereof. The preferred polysaccharide source is gum arabic.

One or more auxiliary non-polysacccharide stabilisers may be used in addition to the polysaccharide stabiliser(s). In particular, examples of auxiliary stabilisers are polyvinyl pyrrolidone, glycol alginate esters, methoxy pectin (HM-pectin), sodium carboxymethylcellulose (CMC-Na), propylene glycol alginate ester (PGA) and beet-derived pectin (BD-pectin), OSA starch. These may be used alone or in combination.

Incidentally, the biopolymer can be used together with other nonionic or negatively charged surfactants. It is desired that the surfactant is usually used so as to be contained in the mineral additive of the present invention in the range of from 0 to 20% by weight.

The amount of the biopolymer to be used may be generally about 0.01 to 10 wt.%, preferably 0.1 to 5 wt.%, and preferably around 1% wt. with respect to the total amount of non-dried product containing nanoparticles, but these ranges do not restrict the scope of the invention because they may vary depending on differences in the type of biopolymer and concentration of nanoparticles. The weight ratio of biopolymer to magnesium-containing nanoparticles is generally at least about 1:10,000 or higher (e.g. more biopolymer in comparison to nanoparticle mass).

The advantages of using the biopolymer-stabilised magnesium-containing nanoparticles according to the present invention are the excellent chemical stability in respect to interaction with other elements, oxidation, complexion activity, and colour change due to the low concentration of free magnesium ions these than soluble magnesium salts. Very importantly, due to the presence of stabilising biopolymer, these particles are compatible with many products containing other biopolymers.

Furthermore, due to their low chemical activity, these magnesium containing nanoparticles allow multiple fortification with vitamins, other minerals such as Fe, Zn, Mn, Ca, Cu, Se and other micro-nutrients.

Due to their very small particle size, sedimentation is very slow or completely negligible in comparison to large particles, which provides excellent physical stability of liquid and semi-liquid products.

In addition, the nanoparticles have excellent dispersibility in aqueous phases, including emulsions and gels, and in products comprising the same.

Due to their small particle size, the mineral compositions have a good bioavailability and bioacessability in comparison to large particles of the same compound.

Due to their small size and low solubility, these substances don not cause adverse organoleptic effects, such bad (bitter) taste, chalkiness and sandiness.

Furthermore, due to their small size, these substances do not have significant abrasion effect on the equipment.

The magnesium-fortified food products of the present invention can be advantageously in the form of beverages, (dry) soups, fat spreads, (yoghurt or protein) drinks, dressings, ice cream or cereal products like bread.

A second aspect of the invention is an magnesium-containing additive for use in the food or other products as magnesium supplement according to any one of the preceding claims, in the form of magnesium containing nanoparticles of magnesium insoluble inorganic or organic salt, or mixtures thereof, and having a particle size of 5 to 1,000 nanometer, wherein the nanoparticles are stabilised by means of a biopolymer.

The magnesium-containing additive preferably comprises a low-soluble salt having a Ks of 10⁻⁷ or less. By low soluble we mean a Ks, where Ks is the solubility product, of 10-7 or less.

The forms of the water-insoluble minerals generally include inorganic salts, organic salts, and the like. The inorganic salts include, for example, magnesium hydroxide, fluoride, carbonate, phosphates (e.g. Mg₃(PO₄)₂, Mg₂P₂O₇) or other inorganic insoluble magnesium salts or mixtures thereof. Examples of organic low-soluble salts are magnesium - partially hydrolysed proteins, magnesium phytate, fatty acids or other sufficiently low soluble organic salts of magnesium. Each of those inorganic salts can be used alone or in admixture of two or more salts.

More preferably, the low-soluble magnesium salt is selected from the group of magnesium hydroxide, carbonate, and phosphates, more preferably pyrophosphate and magnesium orthophosphate or mixtures thereof.

The magnesium containing food product is prepared by mixing the magnesium-containing additive as dispersed in liquid or dried form using a suitable mixing process known in the art.

The amount of magnesium in the food product is at least 5 ppm magnesium (Mg), but preferably it is at least 10, 20, 50, 100, 300, 500 or even 700 ppm.

According to another embodiment, the magnesium-containing additive is prepared by chemical homogeneous or inhomogeneous precipitation in the presence of the biopolymer or a mixture of biopolymers. The precipitation can be achieved by fast mixing, using any suitable fast mixing process, of two solutions or (liquid-in-liquid, liquid-in-gas, gas-in-liquid, or solid-in-liquid or mixtures) dispersions containing magnesium ions and counter ions that form insoluble magnesium salt, respectively. The biopolymer can be present in either or in both phases. The pH of the final product can be from 2 to 12, preferably between 3 and 8. Preferably, the biopolymer is present in the system containing ions that do not interact strongly with the biopolymer.

The resulting magnesium-containing biopolymer-stabilised nanoparticles can be separated from the mother liquid and dried e.g. using spray or freeze drying. Or the can be concentrated or directly dried together with the side products. Preferably, the side products should be soluble salts of food acceptable ions such as Na, K, Cl, etc. The resulting magnesium-containing biopolymer-stabilised nanoparticles can be crystalline, polycrystalline or amorphous. In the preferred embodiment, the biopolymer-stabilised nanoparticles are amorphous or polycrystalline.

Finally, the additive according to the invention, comprising magnesium-containing nanoparticles could be further utilized in a wide variety of fields such as cosmetics, animal feed additives, plant fertilizers, pharmaceutical and medical products, personal and home care products.

The animal feeds containing the magnesium-containing nanoparticles of the present invention include, for example, feeds for pets, domestic animals, cultured fishes, and the like.

Cosmetics containing the magnesium-containing nanoparticles of the present invention include tooth paste, lotion; milky lotion; bathing agents; detergents such as cleansing agents; dentifrices, skin creams and the like.

Industrial products containing the magnesium-containing nanoparticles of the present invention include magnesium-based catalysts, agricultural purposes, in purgative compositions, sheet materials for walls or floors, additive to polymers and resins, inert filler, inflammable filler, for drug delivery, paper filler, water purification.

The invention will mow be further illustrated by means of the following, non-limiting examples.

### Example 1

### Whey protein stabilized magnesium phosphate nanoparticles

A solution containing 0.03M phosphate and 1% wt. whey protein isolate was prepared by dissolving sodium phosphate and whey protein isolate (trade name: BiPro 95, manufactured by Danisco Food International) in demineralized water. A magnesium solution containing 0.02M Mg was prepared by dissolution of magnesium chloride in demineralized water.

The magnesium solution was then quickly added the phosphate-whey protein solution prepared above with vigorous stirring. The pH of the resulting mixture was not further adjusted. The reaction self-terminated after several minutes after the formation of magnesium phosphate nanoparticles, a white suspension that does not sediment for several hours. The resulting reaction mixture was subjected to solid-liquid separation by centrifugation, to concentration, or to drying. The electron microscopy analyses revealed particle sizes of less than 1,000 nm. The resulting reaction mixture was subjected to solid-liquid separation by e.g. centrifugation, to concentration, or to drying.

To prepare Product I, the whey protein-stabilized magnesium phosphate nanoparticles formed in the solid phase were collected and re-suspended in ion-exchanged water to give concentrated magnesium phosphate slurry.

To prepare Product II, the entire reaction mixture was dried.

### Example 2

### Whey protein stabilized magnesium carbonate nanoparticles

A solution containing 0.01M carbonate and 1% wt whey protein isolate was prepared by dissolving sodium carbonate and whey protein isolate (trade name: BiPro 95, manufactured by Danisco Food International) in demineralized water. A magnesium solution containing 0.01M Mg was prepared by dissolution of magnesium chloride in demineralized water.

The magnesium solution was then quickly added the carbonate-whey protein solution prepared above with vigorous stirring. The pH of the resulting mixture was not further adjusted. The reaction self-terminated after several minutes after the formation of nanoparticles, a white suspension of magnesium carbonate nanoparticles that does not sediment for several hours. The electron microscopy analyses revealed particle sizes of less than 1,000 nm. The resulting reaction mixture was subjected to solid-liquid separation by centrifugation, to concentration, or to drying.

To prepare Product III, the whey protein-stabilized magnesium carbonate nanoparticles formed in the solid phase were collected and then re-suspended in ion-exchanged water to give a concentrated magnesium carbonate slurry.

To prepare Product IV, the entire reaction mixture was dried.

### Example 3

### Gum Arabic stabilized magnesium phosphate nanoparticles

A solution containing 0.03M phosphate and 0.5% wt gum Arabic was prepared by dissolving sodium phosphate and Gum Arabic (manufactured by Sigma - Aldrich) in demineralized water. A magnesium solution containing 0.02M Mg was prepared by dissolution of magnesium chloride in demineralized water.

The magnesium solution was then quickly added the phosphate-Gum Arabic solution prepared above with vigorous stirring. The pH of the resulting mixture was not further adjusted. The reaction self-terminated after several minutes after the formation of a white suspension of magnesium phosphate nanoparticles that does not sediment for several hours. The electron microscopy analyses revealed particle sizes of less than 1,000 nm. The resulting reaction mixture was subjected to solid-liquid separation by centrifugation, to concentration, or to drying.

To prepare Product V, the Gum Arabic-stabilized magnesium phosphate nanoparticles formed in the solid phase were collected and the resulting complex was then re-suspended in ion-exchanged water to give a concentrated magnesium phosphate slurry. To prepare Product VI, the entire reaction mixture was dried.

### Example 4

### Gum Arabic stabilized magnesium carbonate nanoparticles

A solution containing 0.01M carbonate and 0.5% wt gum Arabic was prepared by dissolving sodium carbonate and Gum Arabic (manufactured by Sigma - Aldrich) in demineralized water. A magnesium solution containing 0.01M Mg was prepared by dissolution of magnesium chloride in demineralized water.

The magnesium solution was then quickly added the carbonate-Gum Arabic solution prepared above with vigorous stirring. The pH of the resulting mixture was not further adjusted. The reaction self-terminated after several minutes after the formation of white suspension of magnesium carbonate nanoparticles that does not sediment for several hours. The electron microscopy analyses revealed particle sizes of less than 1,000 nm. The resulting reaction mixture was subjected to solid-liquid separation by centrifugation, to concentration, or to drying.

To prepare Product VII, the Gum Arabic-stabilized magnesium carbonate nanoparticles formed in the solid phase were collected, and the resulting complex was then re-suspended in ion-exchanged water to give a concentrated magnesium carbonate slurry.

To prepare Product VII, the entire reaction mixture was dried.

## Claims

1. Food product which has been fortified in magnesium content, having an magnesium content of at least 5 ppm, comprising magnesium containing nanoparticles, wherein the nanoparticles are stabilised by means of a biopolymer.

2. Food product according to claim 1, wherein the nanoparticles comprise a low-soluble magnesium salt having a Ks of 10⁻⁷ or less.

3. Food product according to claim 2, wherein said low-soluble magnesium salts is an inorganic salt selected from the group magnesium oxide, hydroxide, carbonate, phosphates (e.g. Mg₃(PO₄)₂, Mg₂P₂O₇,) or other inorganic insoluble magnesium salts or mixtures thereof.

4. Food product according to claim 2, wherein said low-soluble magnesium salts is selected from the group consisting of organic low-soluble salts of magnesium with partially hydrolysed proteins, phytate, organic acids, or other sufficiently low soluble organic salts of magnesium.

5. Food product according to claim 1-4, comprising a mixture of inorganic and organic salts.

6. Food product according to any one claims 1-5, wherein the biopolymer is selected from the group of polyamides, polysaccharides, organic polyoxoesters synthesized by bacteria and eukaryotic organisms, poly(malic acid), polylactides, polyglycolide, polyanhydrides, polyesteramides and cutin, polythioesters, polyphosphate, polyisoprenoids, polyphenols, and nucleic acids.

7. Food product according to any one claims 1-5, wherein the biopolymer is a protein, a poly(amino acid), a polysaccharide or mixtures thereof.

8. Food product according to claim 7, wherein the biopolymer is a protein.

9. Food product according to claim 8, wherein the protein is selected from the group consisting of soy protein, whey protein and casein.

10. Food product according to claim 7, wherein the biopolymer is a polysaccharide, preferably a gum.

11. Food product according to any one of the preceding claims, the form of fat spread, a (protein) drink, an instant protein drink, a beverage or a dressing.

12. Magnesium-containing additive for use in the food or other products according to any one of the preceding claims, in the form of magnesium containing nanoparticles having a particle size of 5 to 1,000 nanometer, wherein the nanoparticles are stabilised by means of a biopolymer.

13. Magnesium-containing additive according to claim 12, wherein the nanoparticles comprise a low-soluble magnesium salt having a Ks of 10⁻⁷ or less.

14. Magnesium-containing additive according to claim 13, wherein said low-soluble magnesium salt is selected from the group consisting of low-soluble magnesium inorganic salts selected from the group of magnesium hydroxide, fluoride, carbonate, magnesium phosphates (e.g. Mg₃(PO₄)₂, Mg₂P₂O₇,) or other inorganic insoluble magnesium salts or mixtures thereof.

15. Magnesium-containing additive according to claim 13, wherein said magnesium salt is selected from the group consisting of low-soluble magnesium inorganic salts of organic such low-soluble salts of magnesium with partially hydrolysed proteins, phytate, organic acids, or other sufficiently low soluble organic salts of magnesium.

16. Magnesium-containing additive according to claim 12-15, comprising a mixture of inorganic and organic salts.

17. Magnesium-containing additive according to claim 12-16, wherein the biopolymer is selected from the group consisting of polyamides, polysaccharides, organic polyoxoesters synthesized by bacteria and eukaryotic organisms, poly(malic acid), polylactides, polyglycolide, polyanhydrides, polyesteramides and cutin, polythioesters, polyphosphate, polyisoprenoids, polyphenols and nucleic acids.

18. Magnesium-containing additive according to claim 17, wherein the biopolymer is a protein.

19. Magnesium-containing additive according to claim 18, wherein the protein is selected from the group consisting of soy protein, whey protein and casein.

20. Magnesium-containing additive according to claim 12, wherein the biopolymer is a polysaccharide.

21. Magnesium-containing additive according to claim 12, wherein said polysachcaride is selected from the group consisting of locust bean gum, tamarind seed polysaccharide, gellan gum, xanthan gum, guar gum, tara gum, gum arabic, kalaya gum, carrageenan, agar soybean polysaccharides and mixtures thereof.

22. Magnesium-containing additive according to claim 12, further comprising an auxiliary non-polysaccharide stabilizer selected from the group consisting of glycol alginate esters, methoxy pectin (HM-pectin), sodium carboxymethylcellulose (CMC-Na), propylene glycol alginate ester (PGA), and beet-derived pectin (BD-pectin), starch, OSA starch or combinations thereof.

23. Process for preparing the food product according to any one of claims 1-11, comprising the steps of adding or mixing the magnesium-containing additive in solid or dispersed form with the food products.

24. Magnesium-containing additive according to claim 12-13, wherein the low-soluble magnesium salt is obtained by a method for forming salts by homogeneous, heterogeneous or mixed precipitation and in the presence of a biopolymer.
